# EUROPEAN PATENT APPLICATION

(11) **EP 3 930 142 A1**
(43) Date of publication of application: **29.12.2021**
(21) Application number: 20382544.3
(22) Date of filing: 22.06.2020
(51) Int. Cl.: H02J 7/34

(54) **METHOD OF CHARGING A LEAD ACID BATTERY, INSTALLATION COMPRISING AT LEAST ONE LEAD ACID BATTERY AND PRE-ASSEMBLED ASSEMBLY CONFIGURED TO CONVERT THE LEAD ACID BATTERY TO A HYDBRID BATTERY**

(71) Applicant: Ikerlan, S. Coop., 20500 Mondragon (ES)
(72) Inventor: CREGO MEDA, Jon, 20500 Arrasate (ES); RIVAS GUTIERREZ, Mikel, 20500 Arrasate (ES); USABIAGA KARRERA, Maider, 20500 Arrasate (ES); AIZPURU LARRAÑAGA, Iosu, 20120 Hernani (ES)
(74) Representative: Igartua, Ismael

(57) **Abstract**

Method of charging a lead acid battery (2) configured to be charged through a battery charger and through a second battery configured to prevent sulphation of the lead acid battery. The method comprises a first phase which includes a plurality of charges of the lead acid battery (2) through the battery charger, and a second phase which includes a charge of the lead acid battery (2) through the second battery. Installation comprising a lead acid battery configured to be charged through the charging method and a pre-assembled assembly configured to convert the lead acid battery (2) to a hybrid battery.

## Description

### TECHNICAL FIELD

The present invention relates to a method of charging at least one lead acid battery, with an installation comprising at least one lead acid battery configured to be charged through the charging method, and a pre-assembled assembly configured to convert the lead acid battery to a hybrid battery.

### PRIOR ART

Lead-acid batteries are known to be used for applications not connected to the general power supply grid, particularly for energy storage systems based on renewable energies (solar energy, wind energy, etc.), and/or with generators (generally diesel generators). A problem associated with the use of batteries of this type in places where the charging energy is limited and cannot be controlled is the sulphation of lead-acid batteries which limits the service life thereof. The deficiency of a full charge in the lead-acid battery leads to degradation thereof by sulphation.

There are different known methods which attempt to provide solutions to the lead-acid battery sulphation problem. Some methods solve the problem working on the composition and the manufacture of the same lead-acid batteries by means of adding additives such as carbon which improves battery charge acceptance and allows fully charging the battery in a shorter time. The charging time is a critical factor that promotes battery degradation by sulphation in those applications in which the charging process is limited, like in the case of applications in which renewable energies are used for charging batteries.

Other solutions, like the one proposed in US 2012/0098501A1, use the following charging method for improving lead-acid battery efficiency. The method comprises the steps of determining a state of charge for a lead-acid battery, comparing the state of charge against a predetermined charge zone, and maintaining the charge of the lead-acid battery such that the state of charge is within the charge zone. The charge zone is defined by an upper limit not more than 90% of the maximum charge, and preferably not more than 85% of the maximum charge, and a lower limit not less than 70% of the maximum charge, and preferably not less than 75% of the maximum charge.

Finally, US 2017/00070081A1 describes a charger having integrated therein a high-cycle chemical battery and is directly connected to a lead-acid battery and to a photovoltaic panel.

### DISCLOSURE OF THE INVENTION

The object of the invention is to provide a method of charging at least one lead acid battery and, on the other hand, an installation comprising at least one lead acid battery, and a pre-assembled assembly configured to convert the lead acid battery into a hybrid battery, as defined in the claims.

One aspect of the invention refers to a method of charging at least one lead acid battery configured to be charged through one battery charger and through a second battery configured to prevent sulphation of the lead acid battery. The method comprises a first phase which includes a plurality of charges of the lead acid battery through the battery charger, and a second phase which includes a charge of the lead acid battery through the second battery. This second battery does not present the problems of charge clogging, and therefore, of degradation that exist in lead-acid batteries.

This greatly reduces the degradation of the lead battery which is a very important existing problem that occurs in applications where charging through an external charger is restricted. In such cases, when the lead-acid battery is practically charged, but the energy that charges the battery is exhausted, a process of battery sulphation is favoured due to the deficit of complete charge and the lack of time to overfill the battery charge for its adequate desulphation. The method according to the invention minimizes such problem, as well as other degradations which occur in the lead acid battery insofar as the second battery allows to overfill the charging of the lead acid battery by ensuring a complete charge of the battery.

The method of charging according to the invention makes it possible to extend the life of the lead-acid battery as compared with the charging methods known in the state of the art.

Another aspect of the invention refers to an installation comprising at least one load, the load being understood as the energy demand of the installation, a power source configured to supply the load, a lead acid battery configured to supply the load when the power source is not available, a battery charger supplied by the power source and configured to charge the lead acid battery and a second battery configured to supply the lead acid battery to prevent its sulphation, the lead acid battery being charged according to the above method of charging.

Finally, another aspect of the invention is a pre-assembled assembly comprising a second battery, at least one DC/DC converter connected to the second battery and control means. The pre-assembled assembly is configured to be connected directly to a lead acid battery in an installation, the control means being configured to activate the charging of the lead acid battery through the second battery according to the method of charging defined previously. The control means of the pre-assembled assembly are configured to autonomously control the method of charging of the lead-acid battery independently from the rest of the installation.

The pre-assembled assembly allows the lead-acid battery from a previously designed and installed installation to be converted to a hybrid battery by overfilling its charge with the second battery without affecting the rest of the installation. The control means governing the charge/discharge of the second battery are autonomous, independent of the control means governing the installation. Furthermore, the implementation of this control is carried out with low-cost elements, which greatly favours the economic viability of the invention.

Another factor that favours the economic viability of the invention is that the second battery that is proposed to be added has a very reduced capacity compared to the lead acid battery, reducing the final hybridization costs.

These and other advantages and characteristics of the invention will become evident in view of the figures and the detailed description of the invention.

### DESCRIPTION OF THE DRAWINGS

Figure 1 shows an electrical diagram of an installation according to the invention comprising a lead acid battery.
Figure 2 schematically shows a detail of the installation shown in figure 1.
Figure 3 shows a graph comparing the health condition of a lead-acid battery over a lifetime test, expressed as a percentage of capacity over the initial capacity of the new battery and the equivalent number of cycles for complete discharge of the lead-acid battery for different methods of charging the lead-acid battery.

### DETAILED DISCLOSURE OF THE INVENTION

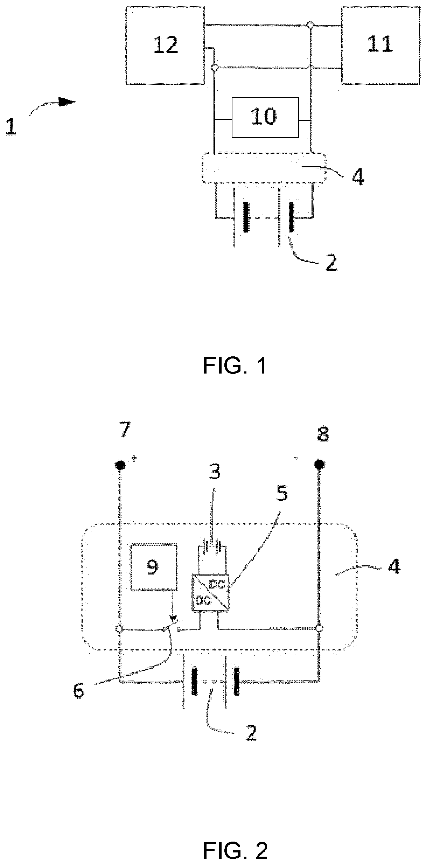

Figure 1 shows an installation 1 for remote applications comprising loads 11, a power source 12 configured to power loads 11, a lead acid battery 2 configured to power loads 11 when power source 12 is not available, a second battery 3 configured to power the lead acid battery 2 avoiding its sulphation, and a battery charger 10 configured to charge the lead acid battery 2. The second battery 3 does not feed the loads 11. On the other hand, the energy source 12 is preferably renewable such as solar, wind, etc. although it could be of any type. The battery charger 10 is powered by energy source 12. Installation 1 also includes a control (not shown) that governs this installation.

One aspect of the invention is a method of charging the lead acid battery 2 included in installation 1 to prevent its sulphation. The lead-acid battery 2 is charged through the battery charger 10 and the second battery 3, thus charging the lead-acid battery 2 until it reaches its charge factor (the charge factor indicating how much more a battery has to be charged to ensure its full charge). The charging method comprises a first phase which includes a plurality of charges of the lead acid battery 2 through the battery charger 10 and a second phase which includes a charge of the lead acid battery 2 through the second battery 3. Although not explicitly stated throughout the description, it is understood that each charging stage of the lead acid battery 2 is accompanied by a discharge stage of the battery. On the other hand, charging of the lead acid battery 2 via the second battery 3 takes place once the battery charger 10 has stopped charging this lead acid battery 2.

The battery charger 10 can charge the lead acid battery 2 at constant current, constant voltage or a combination of both at constant current-constant voltage. Constant current-constant voltage charges are classified according to charging profiles, so an IU charging profile charges first at constant current and then at constant voltage, and an IUI charging profile adds a third charging stage to the previous one at constant current. These types of load are known in the state of the art so a more detailed description of them is not considered necessary for the understanding of the invention.

In an embodiment of the invention, the battery charger 10 charges in constant current mode up to a voltage value and subsequently at constant voltage until the current of the battery charger 10 reaches a predetermined value. The constant voltage is the maximum voltage at which the lead acid battery 2 is charged. Charging via the second battery 3 starts when it is established that the voltage at terminals 7 and 8 of the lead acid battery 2 corresponds to the open circuit voltage. The lead acid battery 2 is considered to be at open circuit voltage when it is detected that the voltage at terminals 7 and 8 remains constant below a maximum voltage, said maximum voltage being the maximum voltage used in the battery charger 10. Said maximum voltage will depend on each manufacturer.

The open circuit voltage depends on each battery, being lower than the maximum voltage of the lead acid battery 2. On the other hand, the open circuit voltage is lower than the floating voltage, understanding by floating voltage the voltage at which a battery could be maintained depending on the type of charger after being fully charged to maintain that capacity by compensating the self-discharge of the battery itself. The floating voltage for a lead-acid battery 2 is approximately 2.3 V/cell.

In an embodiment, said open-circuit voltage must be kept constant for less than, approximately, 15 minutes for the lead-acid battery 2 to start charging through the second battery 3.

In another embodiment of the invention in which the battery charger 10 charges at constant current-constant voltage (CC-CV), instead of controlling the open circuit voltage the current supplied by the battery charger 10 is controlled to determine when the second battery 3 begins to supply energy. Thus, once the lead acid battery 2 reaches the maximum charging voltage recommended by the manufacturer of the battery charger 10 and the current supplied by the charger 10 is detected to be decreasing until, approximately, 1.4% of C₁₀ the nominal capacity of the lead acid battery 2 corresponding to a 10 hour discharge, the second battery 3 starts to charge the lead acid battery 2. In the moment in which said current value is reached, the charging is finished so that the current is zero current and the voltage starts decreasing until reaching the value of the open circuit voltage

In this first phase of the charging method, the battery charger 10 also recharges the second battery 3 to enable it to charge the lead acid battery 2 during the second phase of the charging method.

Thus, in an embodiment, in the first phase of the method, the charger 10 simultaneously charges the second battery 3 and the lead acid battery 2 until the second battery 3 reaches a maximum charging voltage, at which point the charger 10 will continue to charge the lead acid battery 2 until the beginning of the second phase as detailed above. In the case of the second battery 3 being an LFP lithium ion battery, the maximum charge voltage will be, approximately, 3.65 V.

In another embodiment, in the first phase of the method, the battery charger 10 charges the lead-acid battery 2 to the maximum charging voltage recommended by the manufacturer. When it is detected that the voltage is maintained at a constant voltage corresponding to the open circuit voltage for at least a predetermined time, the battery charger 10 switches to charging the second battery 3 at maximum charge voltage.

Charging of the lead acid battery 2 via the second battery 3 is completed when the second battery 3 reaches a predetermined minimum voltage value, when the lead acid battery 2 reaches a predetermined maximum safety voltage value or when a set time for charging via the second battery 3 has elapsed. The predetermined minimum voltage value of the second battery 3 depends on the technology used in the second battery 3. For example, in the case of using LFP lithium batteries, this minimum voltage value would be, approximately, 2.5V. In one example, the voltage value is 2.7V.

In one embodiment, the embodiment described, the second battery 3 is a battery with a high cyclability, understanding by battery with a high cyclability any electrical storage system with a better behaviour for the embodiment of cycles, and therefore a longer operational life than the lead-acid battery to which it is going to be coupled.

In a preferential embodiment, the battery of high cyclability 3 is a lithium-ion battery. In other embodiments, the battery of high cyclability can be a battery of another technology (NiMH, etc.)

On the other hand, the capacity of the second battery configured to supply lead acid battery 2 is at most, approximately, 10% of the nominal capacity C₁₀ of the lead acid battery 2, wherein C₁₀ is the nominal capacity of the lead acid battery 2 corresponding to a 10 hour discharge. The capacity of the second battery configured to supply the lead acid battery means that the capacity of the second battery that can be used to supply the lead acid battery is the defined capacity, i.e. regardless of whether a second battery of higher capacity is connected, the useful capacity of the second battery to supply the lead acid battery is the defined capacity.

In a preferred embodiment, the second battery 3 configured to supply the lead acid battery 2 has a nominal capacity C₁₀ comprised in a range of, approximately, 2% to, approximately, 4% of the nominal capacity C₁₀ of the lead acid battery 2. As in the previous paragraph, the capacity of the second battery configured to supply the lead acid battery means that the capacity of the second battery that can be used to supply the lead acid battery is the one defined, i.e. regardless of whether a second battery of higher capacity is connected, the useful capacity of the second battery to supply the lead acid battery is the one defined.

In an embodiment of the invention, the first phase of the charging method comprises at least four charging cycles of the lead acid battery 2 with the battery charger 10.

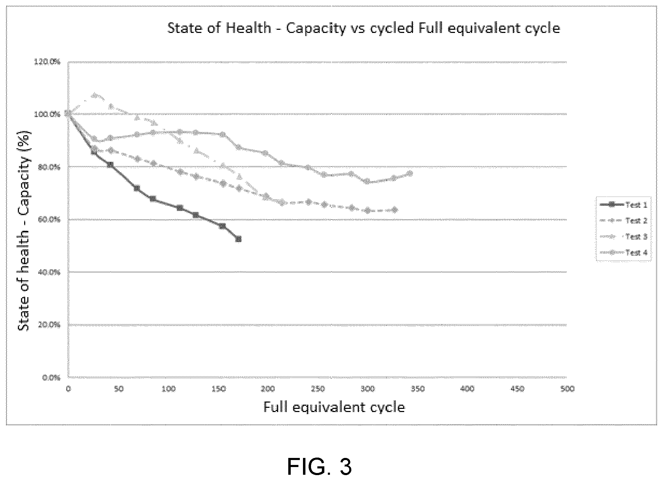

Figure 3 shows a graph comparing the health status of a lead acid battery expressed as a percentage of capacity over the initial capacity of the new battery and the equivalent number of cycles it performs before reaching a given level of deterioration, for different methods of charging the lead acid battery.

The cycles in the batteries can be of different depths of discharge, i.e. there can be cycles of 100% depth of discharge or of 25% for example. The number of cycles performed multiplied by their depth of discharge gives the value of the equivalent number of cycles for the complete discharge of the battery, i.e. for the 100% discharge of the battery. For example, in test 4, the battery has performed 350 complete cycles equivalent to 100% depth of discharge of the battery.

Test 1 shows the behaviour of a lead-acid battery charged with a commercial solar battery charger. Test 2 shows the result of a test wherein a lead acid battery is charged with a commercial solar battery charger 10 hours longer than its end of charge. That is, it has been simulated that the battery charger could continue charging with a minimum current for 10 more hours. As can be seen, the result is better than in the case of the first test but it is not implementable in applications with restricted charging. Test 3 shows the behaviour of a lead acid battery charged with a second battery after a charging cycle with the battery charger. Finally, test 4 shows the behaviour of a lead acid battery charged with a method according to the invention.

As shown in the graphs, the loading method according to the invention provides much better results than the other methods analysed. The life of the lead-acid battery is doubled by providing even better results than those of test 2 in which a charger is simulated with 10 additional hours of charge (which would not be possible to implement in an installation with limited charge as in the installations described above).

On the other hand, another aspect of the invention is the installation 1 shown in figure 1 wherein the lead acid battery 2 is charged according to the charging method described above.

On the other hand, another aspect of the invention is a pre-assembled assembly 4, shown schematically in figure 2, comprising the second battery 3, at least one DC/DC converter 5 connected to the second battery 3 and control means 9. The pre-assembled assembly 4 is configured to be connected directly to the lead acid battery 2 of the installation 1, with the control means 9 of the pre-assembled assembly 4 being configured to activate the charging of the lead acid battery 2 via the second battery 3 according to the charging method defined above. The control means 9 of the pre-assembled assembly are configured to control the charging method of the lead acid battery 2 and the second battery 3 independently from the rest of the installation 1.

Pre-assembly assembly 4 can be easily connected to the lead acid battery 2 in order to overfill the charges of the lead acid battery 2 and thereby extend the life of the lead acid battery 2, without affecting the operation of the installation 1. This makes the conversion of the lead acid battery 2 to a hybrid battery very simple and quick, as it would be sufficient to connect the pre-assembled assembly 4 directly to the lead acid battery 2, and it would be transparent to the rest of the installation 1. The operation of the pre-assembled module 4 is completely autonomous, insofar as it does not require any additional external control and is transparent to the rest of installation 1. In other words, the control means 9 integrated in pre-assembled module 4 are independent and operate autonomously and independently of a control that governs the rest of the installation 1.

The control means 9 control the charge levels via the voltage values measured at terminals 7 and 8, which enables independent controlling of the charging conditions of the battery charger 10.

The pre-assembled assembly also includes a switch 6 connected to the DC/DC converter 5, with the control means 9 configured to act on the switch 6 by opening or closing it to allow the lead acid battery 2 to be charged by the second battery 3. The converter 5 is arranged to be connected in parallel and/or in series to the second battery 3, with the second battery 3 being arranged to be connected in parallel with the lead acid battery 2.

The control means 9 of the pre-assembled assembly are configured to control the lead acid battery assembly 2 and the pre-assembled assembly independently from the rest of the installation 1. The control means 9 of the pre-assembled assembly are configured to switch on or off via the switch 6 the charging of the lead acid battery 2 via the second battery 3 with a current of less than, approximately, 6% of the nominal capacity C₁₀ of the lead acid battery 2 for a specified time which will depend on the charging factor and the selected current, for overfilling the charging and desulphating the lead acid battery 2, with C₁₀ being the nominal capacity of the lead acid battery 2 corresponding to a discharge of 10 hours. The control means 9 of the pre-assembled assembly are also configured to recharge the second battery 3 when required. In the above procedure, the control means 9 assess the charge level of the lead acid battery 2 for charging the lead acid battery 2 with the second battery 3 when the maximum charge level that can be provided by the used battery charger 10 is reached in the lead acid battery 2.

In the embodiment shown in figure 2, the DC/DC converter 5 is a bi-directional converter, but in other embodiments two unidirectional DC/DC converters arranged in parallel can be used. Likewise, in the event that the corresponding DC/DC converter includes an on/off pin, this pin will assume the function of switch 6, eliminating the need to include this switch.

The installation may comprise a plurality of lead acid batteries 2 connected in series and/or parallel to each other, and a plurality of pre-assembled assemblies coupled to the corresponding lead acid battery 2.

What is described for the loading method, in any of its embodiments and/or configurations, is also valid for the embodiments and/or configurations of the installation, as well as of the pre-assembled assembly. Thus, the method includes the embodiment and/or configuration appropriate to the corresponding embodiment and/or configuration of the installation and/or the pre-assembled assembly.

## Claims

1. Method of charging a lead-acid battery (2) configured to be charged through a battery charger (10) and through a second battery (3) configured to prevent sulphation of the lead-acid battery, **characterized in that** it comprises a first phase that includes a plurality of charges of the lead-acid battery (2) through the battery charger (10), and a second phase that includes a charge of the lead-acid battery (2) through the second battery (3).

2. Method of charging according to the preceding claim, wherein the first phase comprises at least four charging cycles of the lead-acid battery (2) with the battery charger (10).

3. Method of charging according to the preceding claim, wherein, when the lead-acid battery (2) is charged through the second battery (3), the second battery (3) supplies a constant current of less than, approximately 6%, of the nominal capacity C₁₀ of the lead-acid battery (2) for a specified time to complete the charge and desulphurize the lead-acid battery (2), with C₁₀ being the nominal capacity of the lead-acid battery (2) corresponding to a 10 hour discharge.

4. Method of charging according to any of the preceding claims, wherein the capacity of the second battery (3) configured to supply the lead acid battery (2) is at most, approximately, 10% of the nominal capacity C₁₀ of the lead acid battery (2), with C₁₀ being the nominal capacity of the lead acid battery (2) corresponding to a 10 hour discharge.

5. Method of charging according to the preceding claim, wherein the second battery (3) configured to supply the lead-acid battery (2) has a nominal capacity C₁₀ in a range from, approximately, 2% to, approximately, 4% of the nominal capacity C₁₀ of the lead-acid battery (2).

6. Method of charging according to any of the preceding claims, wherein the second battery (3) charges the lead-acid battery (2) after detecting, once the lead-acid battery (2) has reached the maximum charging voltage recommended by the manufacturer, that the terminal voltage (7.8) of the lead-acid battery (2) is maintained at a constant open circuit voltage.

7. Method of charging according to any of the claims 1 to 5, wherein the second battery (3) charges the lead-acid battery (2) once the maximum charging voltage set in the battery charger (10) is reached, a current of almost zero is detected by the battery charger (10).

8. Method of charging according to any of the preceding claims, wherein the charging of the lead-acid battery (2) through the second battery (3) is completed when the second battery (3) reaches a predetermined minimum voltage, the lead-acid battery (2) reaches a maximum safety voltage, or when a set time of charging through the second battery (3) has elapsed.

9. Method of charging according to any of the preceding claims, wherein, during the plurality of charges of the lead-acid battery (2) through the battery charger (10), said battery charger (10) charges the second battery (3) and the lead-acid battery (2) until that second battery (3) reaches a maximum charge voltage, at which point the battery charger (10) will continue to charge only the lead-acid battery (2).

10. Method of charging according to any of the preceding claims, wherein the second battery (3) is a high cyclability battery.

11. Method of charging according to the preceding claim, wherein the second battery (3) is a lithium-ion battery

12. Method of charging according to claim 10, wherein the second battery (3) is a NiMH battery.

13. Installation comprising at least one load (11), a power source (12) configured to supply the load (11), a lead-acid battery (2) configured to supply the load (11) when the power source (12) is not available, a battery charger (10) powered by the power source (12) and configured to charge the lead-acid battery (2) and a second battery (3) configured to supply the lead-acid battery (2) to prevent sulphation, with the lead-acid battery (2) being charged according to the method of charging defined in any of claims 1 to 12.

14. Pre-assembled assembly for charging a lead-acid battery (2) comprising a second battery (3), at least one DC/DC converter (5) connected to the second battery (3) and control means (9), **characterized in that** it is configured to be connected directly to the lead-acid battery (2) of an installation (1), the control means (9) being configured to activate the charging of the lead-acid battery (2) through the second battery (3) according to the method of charging defined in any of claims 1 to 12, the control means (9) of the pre-assembled assembly being configured to autonomously control the charging method of the lead-acid battery (2) independently from the rest of the installation (1).
